# EUROPÄISCHE PATENTSCHRIFT

(11) **EP 0 339 204 B1**
(45) Veröffentlichungstag und Bekanntmachung des Hinweises auf die Patenterteilung: **03.11.1993**
(21) Anmeldenummer: 89103238.5
(22) Anmeldetag: 24.02.1989
(51) Int. Cl.: B23B 31/30, F16L 27/08

(54) **Einrichtung zur Zuführung eines Druckmediums**
Admission device for pressurized fluids
Dispositif d'alimentation de fluides sous pression

(30) Priorität: 27.04.1988 DE 3814194
(43) Veröffentlichungstag der Anmeldung: 02.11.1989
(73) Patentinhaber: SMW Schneider & Weisshaupt GmbH, 88074 Meckenbeuren (DE)
(72) Erfinder: Hiestand, Karl, D-7798 Pfullendorf (DE)
(74) Vertreter: Engelhardt, Guido, Dipl.-Ing.

(56) Entgegenhaltungen:
- EP-A- 0 034 728
- GB-A- 1 171 571

## Beschreibung

Die Erfindung bezieht sich auf eine Einrichtung zur Zuführung eines Druckmediums aus einem ortsfesten Zuführungsring in einen mit einem doppelseitig von dem Druckmedium beaufschlagbaren Spannkolben versehenen Spannzylinder, wobei der Zuführungsring über einen Ringspalt auf einem mit dem Spannzylinder trieblich verbundenen rotierenden Bauteil, beispielsweise einer Hohlwelle, drehbar gelagert ist und in den Zuführungsring und das rotierende Bauteil mit seitlichem Abstand zueinander angeordnete Druckmittelkanäle eingearbeitet sind, über die wechselweise das Druckmedium von einer Druckmittelquelle einem der Druckräume des Spannzylinders zuführbar ist, und der Zuführungsring und/oder das rotierende Bauteil im Bereich zwischen den Druckmittelkanälen eine Druckkammer aufweist, die jeweils mit den mit Druckmittel gespeisten Druckmittelkanälen verbunden und derart an den Ringspalt angeschlossen ist, daß dieser in zwei Abschnitte unterteilt ist.

Durch die GB-PS 11 71 571 ist eine Druckmittelübertragungseinrichtung dieser Art bekannt. Bei dieser Ausgestaltung ist zwar zwischen den beiden als umlaufende Ringkanäle ausgebildeten Druckmittelkanälen eine Druckder beiden Druckmittelübertragungen mindestens eine sich in Umfangsrichtung erstreckende an einen der Druckräume des Spannzylinders angeschlossene und in der Länge begrenzte Sammelkammer aufweist, und daß die Teilung der Druckmittelkanäle des Zuführungsringes und die Länge der Sammelkammer des rotierenden Bauteils derart aufeinander abgestimmt sind, daß in jedem Betriebszustand jeweils mindestens eine Querschnittsfläche eines Druckmittelkanals im Bereich der Sammelkammer angeordnet ist.

Zweckmäßig ist es hierbei, den Zuführungsring für jede der beiden Druckmittelübertragungen mit einer Vielzahl von radial gerichteten Druckmittelkanälen und/oder einer oder mehreren sich in Umfangsrichtung erstreckenden Verteilerkammern zu versehen, die jeweils mit einer der Druckmittelzuführungsleitungen verbunden sind.

Nach einer andersartigen Ausgestaltung wird die obengenannte Aufgabe bei einer Einrichtung der eingangs genannten Art dadurch gelöst, daß der Zuführungsring für jede der beiden Druckmittelübertragungen mit mindestens einem Druckmittelkanal und einer an diesen angeschlossenen Verteilerkammer versehen ist, daß das rotierende Bauteil eine Vielzahl von radial gerichteten Druckmittelkanälen aufweist, die einzeln oder über eine Sammelkammer an einen der Druckräume des Spannzylinders angeschlossen sind, und daß die Länge der Verteilerkammer des Zuführungsringes und die Teilung der Druckmittelkanäle des rotierenden Bauteils sollte derart aufeinander abgestimmt sind, daß in jedem Betriebszustand jeweils mindestens eine Querschnittsfläche eines Druckmittelkanals im Bereich der Verteilerkammer angeordnet ist. kammer, die bei einer Druckmittelzuführung wechselweise mit einem der Ringkanäle verbunden ist, vorgesehen, in die jeweils äußeren Spaltabschnitte gelangt hierbei jedoch kein Druckmedium, so daß diese Spaltabschnitte unzureichend gekühlt und geschmiert werden. Dadurch, daß nämlich die Druckmittelkanäle als umlaufende Ringkanäle ausgebildet sind, wird das aus der Druckkammer in diese einströmende Druckmedium aufgefangen und über den drucklosen Druckmittelkanal abgeführt, die äußeren Spaltabschnitte können demnach zeitweise nicht mit Druckmedium versorgt werden. Eine ausreichende Schmierung der beiden äußeren Spaltabschnitte ist demnach bei dieser vier Dichtspaltabschnitte aufweisenden Druckmittelübertragungseinrichtung nicht zu bewerkstelligen, die aufeinander gelagerten Bauteile fressen vielmehr in diesem Bereich nach kurzer Zeit.

Aufgabe der Erfindung ist es demnach, eine Einrichtung zur Zuführung eines Druckmediums der vorgenannten Art zu schaffen, bei der gewährleistet ist, daß alle Ringspaltabschnitte zwischen dem feststehenden Zuführungsring und dem rotierenden Bauteil stets zuverlässig und in einem ausreichenden Maße von dem Druckmedium durchströmt werden, so daß eine zufriedenstellende Wärmeableitung sowie eine ausreichende Schmierung stets gegeben sind. Außerdem soll die Menge des über den Ringspalt abströmenden Druckmediums beeinflußt werden können, und es soll auch möglich sein, um eine Druckabsenkung in dem Spannzylinder vornehmen zu können, beide Druckräume gleichzeitig mit Druckmedium zu beaufschlagen.

Gemäß der Erfindung wird dies bei einer Einrichtung zur Zuführung eines Druckmediums der vorgenannten Gattung dadurch erreicht, daß das rotierende Bauteil für jede Zweckmäßig ist es ferner, die Druckkammer als eine in den Zuführungsring und/oder das rotierende Bauteil eingearbeitete umlaufende im Bereich des Ringspaltes offene Ringnut auszubilden und jeweils über einen Drosselspalt an die Druckmittelzuführungskanäle anzuschließen. Die Drosselspalte kännen hierbei in einfacher Ausgestaltung durch in die die Druckkammer begrenzenden Wände des Zuführungsringes und/oder des rotierenden Bauteils eingearbeitete, sich in Richtung der Druckmittelkanäle erstreckende im Querschnitt vorzugsweise keilförmig gestaltete Freisparungen ausgebildet werden.

Nach einer anderen Ausführungsform ist es aber auch möglich, die Druckkammer über eine mit einem selbsttätig umsteuerbaren Wegeventil versehene Zweigleitung an die jeweils von Druckmittel gespeiste Druckmittelzuführungsleitung anzuschließen.

Bei einem flüssigen Druckmedium als Druckmittel ist es des weiteren angebracht, den Zuführungsring mit zwei seitlich neben den Ringspaltabschnitten angeordneten Auffangkammern zur Aufnahme des abströmenden Druckmediums zu versehen.

Wird eine Einrichtung zur Zuführung eines Druckmediums gemäß der Erfindung ausgebildet, in dem zwischen den Druckmittelkanälen eine Druckkammer angeordnet wird, der bei einer Druckmittelübertragung Druckmedium ständig zugeführt und durch die der Ringspalt in nur zwei Abschnitte unterteilt wird, ist eine gleichmäßige Versorgung der beiden Ringspaltabschnitte mit Druckmedium gewährleistet, so daß eine ausreichende Wärmeableitung und Schmierung gegeben sind. In der Druckkammer wird nämlich ein Druck aufgebaut, das Druckmedium kann somit über beide Ringspaltabschnitte nahezu gleichmäßig abströmen. Zwar wird durch den einen Ringpaltabschnitt im Bereich der jeweils von Druckmittel gespeisten Druckmittelkanäle ein geringfügig höherer Austritt an Druckmedium erfolgen, dies ist jedoch in bezug auf die Gesamtmenge des Druckmediums vernachlässigbar.

Mit Hilfe der Drosselspalte bzw. des Wegeventils und der Abmessungen der Ringspaltabschnitte kann der Austritt des Druckmediums beeinflußt werden. Beispielsweise können diese derart aufeinander abgestimmt werden, daß etwa 1/3 des zugeführten Druckmediums unmittelbar über den jeweiligen Ringspaltabschnitt seitlich abströmt und etwa 2/3 in die Druckkammer gelangen. Das in dieser befindliche Druckmedium strömt wiederum etwa gleichmäßig durch den zweiten Ringspaltabschnitt und den diesem zugeordneten nicht beaufschlagten Druckmitelkanal ab. Beschädigungen der an der Druckmittelübertragung beteiligten Bauteile durch unzureichende Wärmeableitung sind demnach ausgeschlossen, mit Hilfe des ständig unter Druck durch die beiden Ringspaltabschnitte strömenden Druckmediums wird vielmehr die durch die Viskosereibung entstehende Wärme abgeführt.

Des weiteren ist von Vorteil, daß beide Druckräume des Spannzylinders gleichzeitig mit Druckmedium beaufschlagt werden können; eine bei derartigen Spannzylindern gewünschte Druckabsenkung ist somit ohne Schwierigkeiten mit Hilfe der vorschlagsgemäßen Einrichtung vorzunehmen. Bei wirtschaftlicher Fertigung der einzelnen Bauteile ist demnach eine äußerst zuverlässige störungsfreie Druckmittelübertragung von einem feststehenden in ein rotierendes Bauteil, und zwar auch bei hohen Umfangsgeschwindigkeiten, zu bewerkstelligen.

In der Zeichnung sind einige Ausführungsbeispiele der gemäß der Erfindung ausgebildeten Einrichtung zur Zuführung eines Druckmediums dargestellt, die nachfolgend im einzelnen erläutert sind. Hierbei zeigt:
- Figur 1: eine einem Spannzylinder zugeordnete Druckmittelübertragungseinrichtung in einem axialen Schnitt,
- Figur 2: einen achssenkrechten Schnitt nach der Linie II - II der Figur 1 in vergrößerter Wiedergabe,
- Figur 3: einen Ausschnitt aus Figur 1 in einer vergrößerten Darstellung,
- Figur 4: eine andersartige Ausgestaltung einer Druckmittelübertragungseinrichtung in einem Ausschnitt,
- Figur 5: eine weitere Ausführungsform einer Druckmittelübertragungseinrichtung in einer Darstellung gemäß Figur 1
und
- Figur 6: einen Ausschnitt aus Figur 5 in einem achssenkrechten Schnitt und einer vergrößerten Wiedergabe.

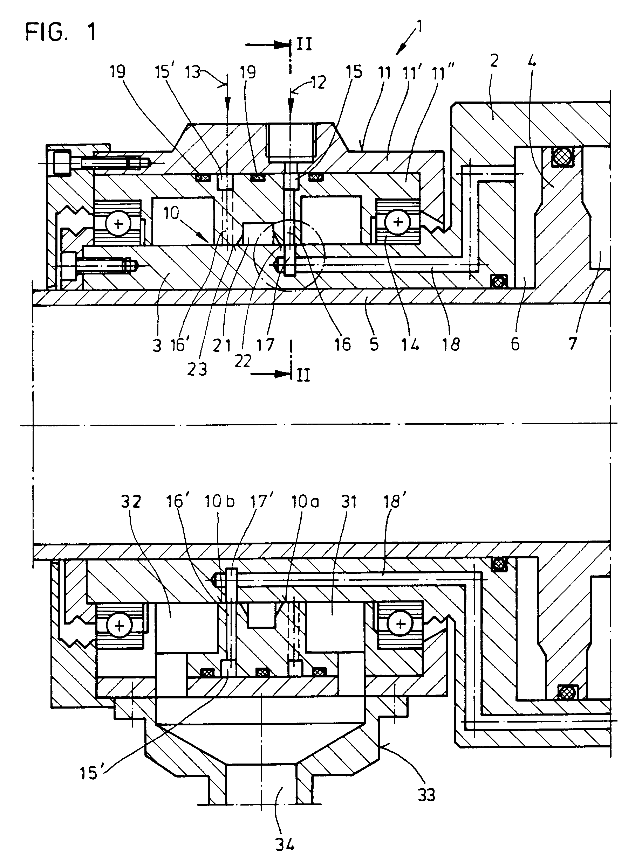

Die in Figur 1 dargestellte und mit 1 bezeichnete Einrichtung dient zur wechselseitigen Zuführung von Druckmedium in einen an eine Werkzeugmaschine angebauten und somit rotierenden Spannzylinder 2, in den ein beidseitig beaufschlagbarer Kolben 4 verschiebbar eingesetzt ist. Über eine Zugstange 5 wirkt der Kolben 4, dessen Druckräumen 6 und 7 das Druckmedium zuführbar ist, mit zu verstellenden Gliedern, beispielsweise den Spannbacken eines Kraftspannfutters, zusammen.

Die Druckmittelübertragungseinrichtung 1 besteht im wesentlichen aus einem ortsfest angeordneten Zuführungsring 11 und einer Hohlwelle 3, die an dem Spannzylinder 2 angeformt ist. Mittels Wälzlager 14 ist der aus den beiden Bauteilen 11′ und 11˝ zusammengesetzte Zuführungsring 11 auf der Hohlwelle 3 abgestützt. Der Zuführungsring 11 und die Hohlwelle 3 schließen einen Ringspalt 10 ein, der so gering als möglich zu bemessen ist, um bei einer Druckmittelübertragung den seitlichen Austritt des Druckmediums in vertretbaren Grenzen zu halten.

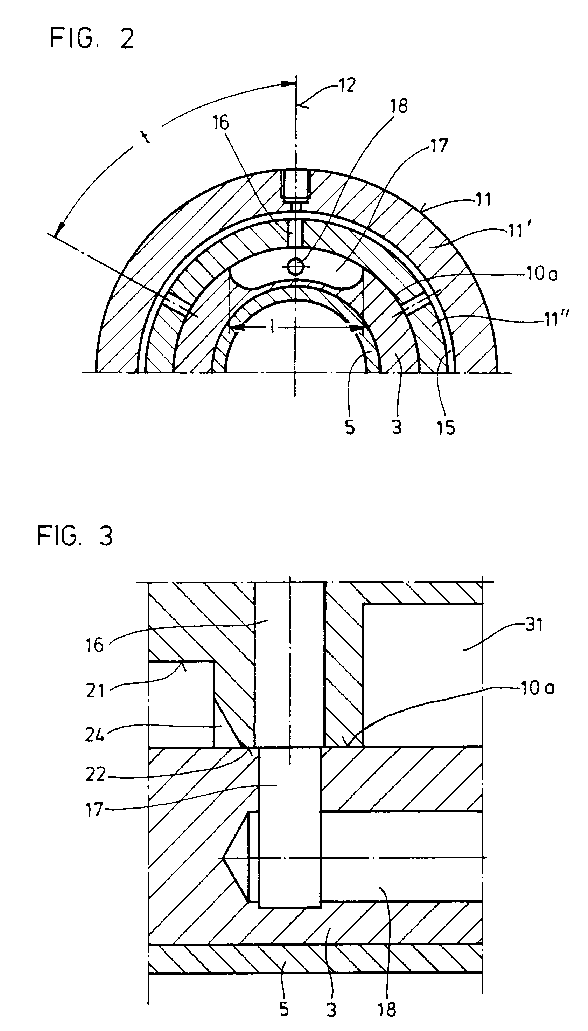

Um dies zu bewerkstelligen, sind in den Zuführungsring 11 und die Hohlwelle 3 mit seitlichem Abstand zueinander angeordnete Druckmittelkanäle 16 und 16′ bzw. mit diesen kommunizierende Sammelkammern 17 und 17′ eingearbeitet. Die Druckmittelkanäle 16, 16′ sind jeweils über einen Ringkanal 15 bzw. 15′ an Druckmittelzuführungsleitungen 12 bzw. 13 angeschlossen, die Sammelkammern 17 und 17′ sind über Kanäle 18 bzw. 18′ mit den Druckräumen 6 bzw. 7 des Kolbens 4 verbunden. Die Teilung t der Druckmittelkanäle 16 und 16′ ist hierbei derart gewählt und die Sammelkammern 17 und 17′ sind in ihrer Länge l, wie dies der Figur 2 entnommen werden kann, derart bemessen, daß in jedem Betriebszustand jeweils mindestens ein Druckmittelkanal 16 bzw. 16′ in die Sammelkammer 17 bzw. 17′ mündet. Da der Zuführungsring 11 aus den beiden beispielsweise aufeinander aufgeschrumpften Bauteilen 11′ und 11˝ besteht, können die mittels Dichtungen 19 seitlich abgedichteten Ringkanäle 15 und 15′ ohne weiteres in das Bauteil 11˝ eingearbeitet werden.

Damit bei einer Druckmittelübertragung im Bereich des Ringpaltes 10 eine ausreichende Schmierung und Kühlung der Hohlwelle 3 und des Zuführungsringes 11 gewährleistet sind, ist in diesen zwischen den Druckmittelkanälen 16 und 16′ eine Druckkammer 21 vorgesehen, die jeweils mit den mit Druckmittel bespeisten Kanälen 16 oder 16′ verbunden ist. Außerdem ist die als Ringnut ausgebildete Druckkammer 21 derart an den Ringspalt 10 angeschlossen, daß dieser in zwei Abschnitte 10 a und 10 b unterteilt ist.

Bei der Ausgestaltung nach Figur 1 ist die Druckkammer 21 über Drosselspalte 22 und 23 an die jeweils Druckmedium fördernden Druckmittelkanäle 16 oder 16′ angeschlossen. Die Drosselspalte 22 und 23 sind hierbei, wie dies insbesondere der Figur 3 entnommen werden kann, durch in die die Druckkammer 21 begrenzenden Seitenwände eingearbeitete Freisparungen 24, die im Querschnitt keilförmig gestaltet sind, gebildet. Außerdem sind die Abmessungen der Drossespalte 22 und 23 sowie der Ringspaltabschnitte 10 a und 10 b derart gewählt, daß bei einer Druckmittelzuführung beispielsweise über die Druckmittelkanäle 16 etwa 1/3 des Druckmedium in eine seitlich neben dem Ringspaltabschnitt 10 a angeordnete Auffangkammer 31 abströmt und etwa 2/3 über den Drosselspalt 22 in die Druckkammer 21 gelangt. Die eine Hälfte des in der Druckkammer 21 befindlichen Druckmediums strömt über den Drosselspalt 23 und die entlüfteten Druckmittelkanäle 16′ unmittelbar zurück in einen Sammelbehälter, die andere Hälfte dagegen strömt durch den Ringspaltabschnitt 10 b und wird in einer seitlich neben diesen vorgesehenen Auffangkammer 32 aufgenommen. Über ein auf den Zuführungsring 11 aufgesetztes Gehäuse 33, in das ein Rückführungskanal 34 eingearbeitet ist, sind die Auffangkammern 31 und 32 ebenfalls mit dem Sammelbehälter verbunden. Den beiden Dichtspaltabschnitten 10 a und 10 b wird somit in jedem Betriebszustand ausreichend Druckmedium unter Druck zugeführt, so daß stets eine ausreichende Schmierung und Kühlung bzw. Wärmeabführung gewährleistet sind.

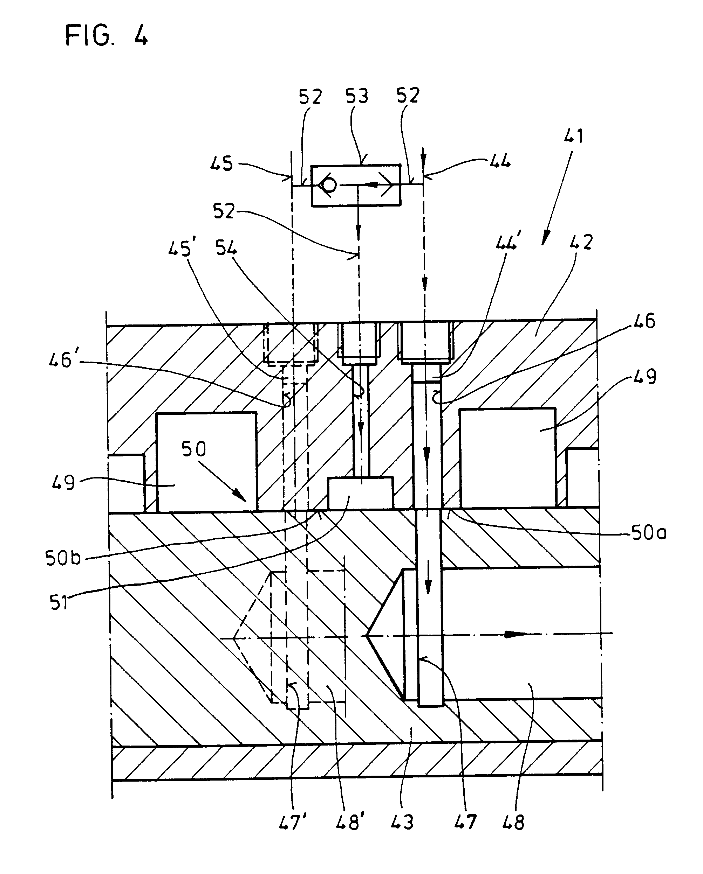

Bei der Druckmittelübertragungseinrichtung 41 nach Figur 4, deren auf einer rotierenden Hohlwelle 43 angeordneter Zuführungsring 42 einteilig ausgebildet ist, ist eine zwischen den Druckmittelkanälen 46 und 46′, die mittels in der Hohlwelle 43 eingearbeitete Sammelkammern 47 bzw. 47′ mit Kanälen 48, 48′ kommunizieren, angeordnete in den Zuführungsring 42 eingearbeitete Druckkammer 51 selbsttätig an die jeweils Druckmedium führende Druckmittelzuführungsleitung 44 oder 45 anschließbar. Dazu ist in eine mit diesen verbundene Zweigleitung 52 ein selbsttätig umschaltbares Wegeventil 53 eingesetzt und in den Zuführungsring 42 ist ein Kanal 54 eingearbeitet, durch den die Zweigleitung 52 mit der Druckkammer 51 verbunden ist.

Der Ringspalt 50, neben dem wiederum Auffangkammern 49 vorgesehen sind, wird somit durch die Druckkammer 51 in zwei Ringspaltabschnitte 50 a und 50 b unterteilt. Und bei einer Druckmittelübertragung über die Druckmittelkanäle 46, die untereinander über einen Ringkanal 44′ verbunden sind, oder über die Druckmittelkanäle 46′, die über einen Ringkanal 45′ an die Druckmittelzurührungsleitung 45 angeschlossen sind, wird jedem der Ringspaltabschnitte 50 a und 50 b in einem ausreichenden Maße Druckmedium zur Wärmeableitung zugeführt.

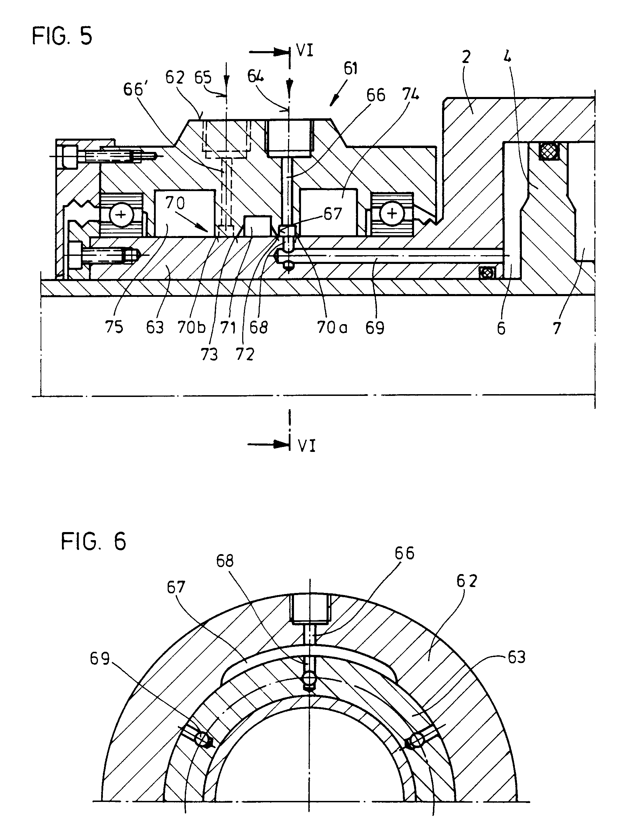

Die in Figur 5 dargestellte Druckmitelübertragungseinrichtung 61 weist ebenfalls einen mit Druckmittelkanälen 66 und 66′ versehenen auf einer rotierenden Hohlwelle 63 über einen Ringspalt 70 gelagerten Zuführungsring 62 auf. Zwischen den an die Druckmittelzuführungsleitungen 64 und 65 angeschlossenen Druckmittelkanälen 66 und 66′ ist wiederum eine Druckkammer 71 angeordnet, die über Drosselspalte 72 und 73 mit den Druckmittelkanälen 66 und 66′ ständig verbunden ist. Durch die Druckkammer 71 wird der Ringspalt 70 somit in die beiden Ringspaltabschnitte 70 a und 70 b unterteilt.

In den mit seitlich neben den Ringspaltabschnitten 70 a und 70 b angeordneten Auffangkammern 74 und 75 versehenen Zuführungsring 62 ist bei diesem Ausführungsbeispiel nur ein Druckmittelzuführungskanal 66 bzw. 66′ eingearbeitet, der, wie dies der Figur 6 entnommen werden kann, in eine Verteilerkammer 67 mündet. Dagegen weist die Hohlwelle 63 eine Vielzahl von radial gerichteten Druckmittelkanälen 68 auf, die mit der Verteilerkammer 67 kommunizieren und über Kanäle 69 mit den Druckräumen 6 bzw. 7 des Spannzylinders 2 in Verbindung stehen. Selbstverständlich ist es, insbesondere bei dieser Ausgestaltung, aber auch möglich, die Druckkammer 71 in der Hohlwelle 63 vorzusehen. Die Ringspaltabschnitte 70 a und 70 b werden mit Hilfe der Druckkammer 71 stets ausreichend mit Druckmedium zur Kühlung und Schmierung versorgt.

## Patentansprüche

1. Einrichtung (1; 41) zur Zuführung eines Druckmediums aus einem ortsfesten Zuführungsring (11; 42) in einen mit einem doppelseitig von dem Druckmedium beaufschlagbaren Spannkolben (4) versehenen Spannzylinder (2), wobei der Zuführungsring (11; 42) über einen Ringspalt (10; 50) auf einem mit dem Spannzylinder (2) trieblich verbundenen rotierenden Bauteil, beispielsweise einer Hohlwelle (3; 43), drehbar gelagert ist und in den Zuführungsring (11; 42) und das rotierende Bauteil (3; 43) mit seitlichem Abstand zueinander angeordnete Druckmittelkanäle (16, 16' , 17, 17'; 46, 46', 47, 47') eingearbeitet sind, über die wechselweise das Druckmedium von einer Druckmittelquelle einem der Druckräume (6, 7) des Spannzylinders (4) zuführbar ist, und der Zuführungsring (11; 42) und/oder das rotierende Bauteil (3; 43) im Bereich zwischen den Druckmittelkanälen (16, 16' , 17, 17'; 46, 46', 47, 47') eine Druckkammer (21; 51) aufweist, die jeweils mit den mit Druckmittel gespeisten Druckmittelkanälen (16, 16', 17, 17'; 46, 46', 47, 47') verbunden und derart an den Ringspalt (10; 50) angeschlossen ist, daß dieser in zwei Abschnitte (10a, 10b; 50a, 50b) unterteilt ist.
**dadurch gekennzeichnet,**
daß das rotierende Bauteil (3; 43) für jede der beiden Druckmittelübertragungen mindestens eine sich in Umfangsrichtung erstreckende an einen der Druckräume (6 bzw. 7) des Spannzylinders (2) angeschlossene und in der Länge begrenzte Sammelkammer (17, 17'; 47, 47') aufweist, und daß die Teilung (47, 47') der Druckmittelkanäle (16, 16'; 46, 46') des Zuführungsringes (11; 42) und die Länge (1) der Sammelkammer (17, 17') des rotierenden Bauteils (3; 43) derart aufeinander abgestimmt sind, daß in jedem Betriebszustand jeweils mindestens eine Querschnittsfläche eines Druckmittelkanals (16, 16'; 46, 46') im Bereich der Sammelkammer (17, 17'; 47, 47') angeordnet ist.

2. Einrichtung nach Anspruch 1,
**dadurch gekennzeichnet,**
daß der Zuführungsring (11; 42) für jede der beiden Druckmittelübertragungen mit einer Vielzahl von radial gerichteten Druckmittelkanälen (16, 16'; 46, 46') und/oder eine oder mehreren sich in Umfangsrichtung erstreckenden Verteilerkammern (15, 15'; 44', 45') versehen ist, die jeweils mit einer der Druckmittelzuführungsleitungen (12, 13; 44, 45) verbunden sind.

3. Einrichtung (61) zur Zuführung eines Druckmediums aus einem ortsfesten Zuführungsring (62) in einen mit einem doppelseitig von Druckmedium beaufschlagbaren Spannkolben (4) versehenen Spannzylinder (2),
wobei der Zuführungsring (62) über einen Ringspalt (70) auf einem mit dem Spannzylinder (2) trieblich verbundenen rotierenden Bauteil, beispielsweise einer Hohlwelle (63), drehbar gelagert ist und in den Zuführungsring (62) und das rotierende Bauteil (63) mit seitlichem Abstand zueinander angeordnete Druckmittelkanäle (66, 67) eingearbeitet sind, über die wechselweise das Druckmedium von einer Druckmittelquelle einem der Druckräume (6, 7) des Spannzylinders (4) zuführbar ist, und der Zuführungsring (62) und/oder das rotierende Bauteil (63) im Bereich zwischen den Druckmittelkanälen (66, 67) eine Druckkammer (61) aufweist, die jeweils mit den mit Druckmittel gespeisten Druckmittelkanälen (66, 67) verbunden und derart an den Ringspalt (70) angeschlossen ist, daß dieser in zwei Abschnitte (70a, 70b) unterteilt ist,
**dadurch gekennzeichnet,**
daß der Zuführungsring (62) für jede der beiden Druckmittelübertragungen mit mindestens einem Druckmittelkanal (66) und einer an diesen angeschlossenen Verteilerkammer (67) versehen ist, daß das rotierende Bauteil (63) eine Vielzahl von radial gerichteten Druckmittelkanälen (68) aufweist, die einzeln oder über eine Sammelkammer an einen der Druckräume (6, 7) des Spannzylinders (2) angeschlossen sind, und daß die Länge der Verteilerkammer (67) des Zuführungsringes (62) und die Teilung der Druckmittelkanäle (68) des rotierenden Bauteils (63) derart aufeinander abgestimmt sind, daß in jedem Betriebszustand jeweils mindestens eine Querschnittsfläche eines Druckmittelkanals (68) im Bereich der Verteilerkammer (67) angeordnet ist.

4. Einrichtung nach einem oder mehreren
der Ansprüche 1 bis 3,
**dadurch gekennzeichnet,**
daß die Druckkammer (21; 51; 71) als eine in den Zuführungsring (11; 42; 62) und/oder das rotierende Bauteil (3;43; 63) eingearbeitete umlaufende im Bereich des Ringspaltes (10; 50; 70) offene Ringnut ausgebildet ist.

5. Einrichtung nach einem oder mehreren
der Ansprüche 1 bis 3,
**dadurch gekennzeichnet,**
daß die Druckkammer (21; 71) jeweils über einen Drosselspalt (22, 23; 72, 73) an die Druckmittelkanäle (16, 16', 17, 17'; 66, 67) angeschlossen ist.

6. Einrichtung nach Anspruch 5,
**dadurch gekennzeichnet,**
daß die Drosselspalte (22, 23; 72, 73) durch in die die Druckkammer (21; 71) begrenzenden Wände des Zuführungsringes (11; 62) und/oder des rotierenden Bauteils (3; 63) eingearbeitete, sich in Richtung der Druckmittelkanäle (16, 16', 17, 17'; 66, 67) erstreckende im Querschnitt vorzugsweise keilförmig gestaltete Freisparungen (24) ausgebildet sind.

7. Einrichtung nach einem oder mehreren
der Ansprüche 1 bis 3,
**dadurch gekennzeichnet,**
daß die Druckkammer (51) über eine mit einem selbsttätig umsteuerbaren Wegeventil (53) versehene Zweigleitung (52) an die jeweils von Druckmittel gespeiste Druckmittelzuführungsleitung (44 bzw. 45) anschließbar ist.

8. Einrichtung nach einem oder mehreren der
Ansprüche 1 bis 7,
**dadurch gekennzeichnet,**
daß bei einem flüssigen Druckmedium als Druckmittel der Zuführungsring (11; 42; 62) mit zwei seitlich neben den Ringspaltabschnitten (10a, 10b; 50a , 50b; 70a, 70b) angeordneten Auffangkammern (31, 32; 54; 74, 75) zur Aufnahme des abströmenden Druckmediums versehen ist.

## Claims

1. Admission device (1; 41) for pressurized fluids from a fixed admission ring (11; 42) to a clamping cylinder (2) which is provided with a clamping piston (4) that can be acted upon from both sides by the pressurized fluid, whereby the admission ring (11; 42) is rotably mounted by means of a ring slot (10; 50) on a rotating component which is drivably connected to the clamping cylinder (2), and which may for example take the form of a hollow shaft (3; 43) and in which ducts (16, 16', 17, 17' ; 46, 46', 47, 47') for pressurized fluid are formed at lateral intervals to each other into the admission ring (11; 42) and the rotating component (3; 43), by means of said ducts (16, 16', 17, 17' ; 46, 46', 47, 47') the pressurized fluid may at alternating intervals be admitted from a source of pressurized fluid to one of the pressure chambers (6, 7) in the clamping cylinder (4), and the admission ring (11; 42) and/or the rotating component (3; 43) incorporates a pressure chamber (21; 51) in the area between the ducts (16, 16', 17, 17' ; 46, 46', 47, 47') for pressurized fluid such that each pressure chamber (21; 51) is connected with the ducts (16, 16', 17, 17' ; 46, 46', 47, 47') for pressurized fluid which are supplied with pressurized fluid and are thereby connected to the ring slot (10; 50) in such a way that the said ring slot (10; 50) is divided into two sections (10a, 10b, 50a, 50b).
**characterized in that,**
the rotating component (3; 43) is provided with at least one collection chamber (17, 17'; 47, 47') for each of the two transmissions of pressurized fluid and the said collection chamber (17, 17'; 47, 47') extends around the circumference and is connected to one of the pressure chambers (6 or 7) of the clamping cylinder (2) and is also limited in length, and in that the division (47, 47') of the ducts (16, 16'; 46, 46') for pressurized fluid in the admission ring (11; 42) and the length (1) of the collection chamber (17, 17') of the rotating component (3; 43) are adapted to one another in such a manner that no matter what the operating condition may be, at least one cross-sectional area of one duct (16, 16'; 46, 46') is located in the area of the collection chamber (17, 17'; 47, 47').

2. Device in accordance with Claim 1,
**characterized in that,**
the admission ring (11; 42) for each of the two pressurized fluid transmissions is provided with a number of radially arranged ducts (16, 16' ; 46, 46') for pressurized fluid and/or one or more distribution chambers (15, 15' ; 44', 45') which extend around the circumference and which are each connected to one of the admission lines for pressurized fluid (12, 13 ; 44, 45).

3. Device (61) for supplying a pressurized fluid from a fixed admission ring (62) to a clamping cylinder (2)which is provided with a clamping piston (4) that can be acted upon from both sides by the pressurized fluid, whereby the admission ring (62) is rotably mounted by means of a ring slot (70) on a rotating component which is drivably connected to the clamping cylinder (2), and which may for example take the form of a hollow shaft (63) and in which ducts (66, 67) for pressurized fluid are formed at lateral intervals to each other into the admission ring (62) and the rotating component (63), by means of said ducts (66, 67) the pressurized fluid may at alternating intervals be fed from a source of pressurized fluid to one of the pressure chambers (6, 7) in the clamping cylinder (4), and the admission ring (62) and/or the rotating component (63) incorporates a pressure chamber (61) in the area between the ducts (66, 67) for pressurized fluid such that each pressure chamber (61) is connected with the ducts (66, 67) for pressurized fluid which are supplied with pressurized fluid and are thereby connected to the ring slot (70) in such a way that this ring slot (70) is divided into two sections (70a, 70b),
**characterized in that,**
the admission ring (62) for each of the two pressurized fluid transmissions is provided with at least one duct (66) for pressurized fluid and one distribution chamber (67) connected to this duct (66) for pressurized fluid, in that the rotating component (63) demonstrates a number of radial ducts (68) for pressurized fluid which are individually connected or else connected through a collection chamber to one of the pressure chambers (6, 7) of the clamping cylinder (2), and in that the length of the distribution chamber (67) of the admission ring (62) and the division of the ducts (68) for pressurized fluid in the rotating component (63) are adapted to one another in such a manner that no matter what the operating condition may be, at least one cross-sectional area of one duct (68) is located in the area of the collection chamber (67).

4. Device in accordance with one or more of Claims 1 to 3,
**characterized in that,**
the pressure chamber (21; 51; 71) is formed as an open annular groove rotating in the area of the ring slot (10; 50; 70) and formed into the admission ring (11; 42; 62) and/or the rotating component (3; 43; 63).

5. Device in accordance with one or more of Claims 1 to 3,
**characterized in that,**
each pressure chamber (21; 71) is connected to the ducts (16, 16', 17, 17'; 66, 67) for pressurized fluid by means of a throttle aperture (22, 23; 72, 73).

6. Device in accordance with Claim 5,
**characterized in that,**
the throttle aperture (22, 23; 72, 73) is formed by notches (24) shaped into the walls of the admission ring (11; 62) and/or the rotating component (3; 63) which delimit the pressure chamber (21; 71), whereby the notches (24) extend in the direction of the ducts (16, 16', 17, 17'; 66, 67) for pressurized fluid and, in a preferable embodiment, have a wedge-shaped cross-section.

7. Device in accordance with one or more of Claims 1 to 3,
**characterized in that,**
the pressure chamber (51) can be connected to whichever admission line for pressurized fluid (44 or 45) is being supplied with pressurized fluid by means of a branch line (52) which is provided with a directional valve that can be changed over automatically.

8. Device in accordance with one or more of Claims 1 to 7,
**characterized in that,**
given that the pressure transmitting medium is a pressurized fluid, the admission ring (11; 42; 62) is provided with two buffer chambers (31, 32; 54; 74, 75) which are located laterally next to the ring slot sections (10a, 10b; 50a, 50b; 70a, 70b) and which collect the draining pressurized fluid.

## Revendications

1. Dispositif (1; 41) d'alimentation de fluides sous pression à partir d'un anneau d'amenée fixe (11; 42) dans un mandrin de serrage (2) renfermant un piston de serrage (4) soumis de part et d'autre au fluide sous pression, l'anneau d'amenée (11; 42) tournant au moyen d'une gorge annulaire (10; 50) sur un composant rotatif entraîné par le cylindre de serrage (2), p. ex. un arbre creux (3; 43), et dans lequel anneau d'amenée (11; 42) et le composant rotatif (3; 43) sont pratiqués avec un certain espace entre eux, des canaux à fluide sous pression (16, 16', 17, 17'; 46, 46', 47, 47') permettant au fluide sous pression de se diriger respectivement à partir d'une source vers les chambres de pression (6, 7) du cylindre de serrage (4), l'anneau d'amenée (11; 42) et/ou le composant rotatif (3; 43) étant muni entre les canaux à fluide sous pression (16, 16', 17, 17'; 46, 46', 47, 47') d'une chambre de pression (21; 51) liée respectivement aux canaux (16, 16', 17, 17'; 46, 46', 47, 47') véhiculant le fluide sous pression et raccordée à la gorge annulaire (10; 50) de manière à ce que celle-ci soit subdivisée en deux sections (10a, 10b; 50a, 50b)
caractérisé par le fait que
pour chacun des deux transports de fluide sous pression, le composant rotatif (3; 43) est muni d'au moins une chambre de récupération (17, 17'; 47, 47') aménagée en direction du pourtour, raccordée à une des chambres de pression (6 ou 7) du cylindre de serrage (2) et limitée dans le sens longitudinal, que la division (47, 47') des canaux à fluide sous pression (16, 16'; 46, 46') et la longueur (1) de la chambre de récupération (17, 17') du composant rotatif (3; 43) soient adaptées l'une par rapport à l'autre de sorte qu'à tout état de service, au moins une section transversale d'un des canaux à fluide sous pression (16, 16'; 46, 46') se trouve au niveau de la chambre de récupération (17, 17'; 47, 47').

2. Dispositif d'après la revendication 1,
caractérisé par le fait que
pour chacun des deux transports de fluide sous pression, l'anneau d'amenée (11; 42) soit muni d'une multitude de canaux à fluide sous pression (16, 16'; 46, 46') et/ou d'une ou de plusieurs chambres de distribution (15, 15'; 44', 45') aménagées en direction du pourtour et liées respectivement avec une des conduites d'arrivée (12, 13; 44, 45) pour le fluide sous pression.

3. Dispositif (61) d'alimentation de fluides sous pression à partir d'un anneau d'amenée fixe (62) dans un mandrin de serrage (2) renfermant un piston de serrage (4) soumis de part et d'autre au fluide sous pression, l'anneau d'amenée (62) tournant au moyen d'une gorge annulaire (70) sur un composant rotatif entraîné par le cylindre de serrage (2), p. ex. un arbre creux (63), et qu'il soit pratiqué dans l'anneau d'amenée (62) et dans le composant rotatif (63), avec un certain espace entre eux, des canaux à fluide sous pression (66, 67) permettant au fluide sous pression de se diriger respectivement à partir d'une source vers les chambres de pression (6, 7) du cylindre de serrage (4), l'anneau d'amenée (62) et/ou le composant rotatif (63) étant muni entre les canaux à fluide sous pression (66, 67) d'une chambre de pression (61) liée respectivement aux canaux (66, 67) véhiculant le fluide sous pression et raccordée à la gorge annulaire (70) de manière à ce que celle-ci soit subdivisée en deux sections (70a, 70b),
caractérisé par le fait que
pour chacun des deux transports de fluide sous pression l'anneau d'amenée (62) soit muni d'au moins un canal à fluide sous pression (66) et d'une chambre de distribution (67) raccordée, que le composant rotatif (63) comporte une multitude de canaux radiaux à fluide sous pression (68) liées individuellement ou, par l'intermédiaire d'une chambre de récupération, avec une des chambres sous pression (6, 7) du cylindre de serrage (2) et que la longueur de la chambre de distribution (67) de l'anneau d'amenée (62) et la division des canaux à fluide sous pression du composant rotatif (63) soient adaptées l'une par rapport à l'autre de sorte qu'à tout état de service, au moins une section transversale d'un des canaux à fluide sous pression (68) se trouve au niveau de la chambre de distribution (67).

4. Dispositif d'après une ou plusieurs des revendications 1 à 3,
caractérisé par le fait que
la chambre de pression (21; 51; 71) soit conçue sous la forme d'une rainure annulaire pratiquée dans l'anneau d'amenée (11; 42; 62) et/ou le composant rotatif (3; 43; 63), épousant le pourtour et ouverte au niveau de-la gorge annulaire (10; 50; 70).

5. Dispositif d'après une ou plusieurs des revendications 1 à 3,
caractérisé par le fait que
la chambre de pression (21; 71) soit branchée respectivement via une fente d'étranglement (22, 23; 72, 73) aux canaux à fluide sous pression (16, 16', 17, 17'; 66, 67).

6. Dispositif d'après la revendication 5,
caractérisé par le fait que
la fente d'étranglement (22, 23; 72, 73) soit formée par les évidements (24) de préférence triangulaires, pratiqués dans les parois de l'anneau d'amenée (11; 62) et/ou du composant rotatif (3; 63) délimitant la chambre de pression (21; 71), évidements orientés en direction des canaux à fluide sous pression (16, 16', 17, 17'; 66, 67).

7. Dispositif d'après une ou plusieurs des revendications 1 à 3,
caractérisé par le fait que
la chambre de pression (51) se laisse raccorder par l'intermédiaire d'une conduite de dérivation (52) comportant une vanne automatique de direction (53), à la conduite d'arrivée (44 ou 45) respective véhiculant le fluide sous pression.

8. Dispositif d'après une ou plusieurs des revendications 1 à 7,
caractérisé par le fait
qu'en cas de fluide liquide en tant que médium de pression, l'anneau d'amenée (11; 42; 62) soit muni de deux chambres de récupération (31, 32; 54; 74, 75) disposées latéralement à côté des sections de fente annulaire (10a, 10b; 50a, 50b; 70a, 70b) et destinées à récupérer le médium de pression s'écoulant.
